(19)

Europäisches
Patentamt

European
Patent Office

Office européen
des brevets

(11) **EP 4 604 214 A1**

(12) **EUROPEAN PATENT APPLICATION**

(43) Date of publication:
**20.08.2025   Bulletin 2025/34**

(21) Application number: **24305260.2**

(22) Date of filing: **15.02.2024**

(51) International Patent Classification (IPC):
*H01M 4/525* (2010.01)   *H01M 4/04* (2006.01)
*H01M 10/0525* (2010.01)   *H01M 4/131* (2010.01)
*C01G 53/00* (2025.01)   *H01M 4/505* (2010.01)
*H01M 4/36* (2006.01)

(52) Cooperative Patent Classification (CPC):
**H01M 4/505; C01G 53/50; H01M 4/0404;
H01M 4/364; H01M 4/525; H01M 10/0525;**
H01M 4/0435; H01M 4/131

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Automotive Cells Company SE
33520 Bruges (FR)**

(72) Inventors:
• **ULLDEMOLINS, Michel
  33300 BORDEAUX (FR)**
• **AMISSE, Robin
  1950 SION (CH)**

(74) Representative: **Lavoix
2, place d'Estienne d'Orves
75441 Paris Cedex 09 (FR)**

(54) **BLEND OF CATHODE ACTIVE MATERIALS FOR THE CATHODE OF AN ELECTROCHEMICAL CELL AND PROCESS FOR ASSEMBLING AN ELECTROCHEMICAL CELL HAVING SUCH A CATHODE**

(57)     A blend of cathode active materials for a cathode of an electrochemical cell, consisting of:
i) from 10% to 90% by weight of a NMX active material in relation to the total weight of the cathode active material, said NMX active material of formula $Li_aNi_bMn_cX_dO_2$; and
ii) from 10% to 90% by weight of a LFMP active material in relation to the total weight of the cathode active material, of formula $Li_eFe_fMn_gD_h(PO_4)$.

EP 4 604 214 A1

**Description**

The present invention concerns a blend of cathode active materials for a cathode of an electrochemical cell, a cathode comprising such a blend and a process for assembling an electrochemical cell comprising such a cathode.

Lithium-ion (Li-ion) batteries are widely used as power source for all modern consumer electronic devices and in particular for electric vehicles.

Li-ion cells exhibit indeed superior performance characteristics over most other rechargeable battery systems. Among others, the Li-ion technology offers high energy and power density, long life-cycle and high reliability, rendering this technology suitable for Electric Drive Vehicles.

A lithium-ion cell comprises a cathode and an anode separated by a separator. An electrolyte solution, enabling ions exchanges between the cathode and the anode, impregnates the cathode and the anode, as well as the separator.

The cathode comprises one or more cathode active materials.

The cathode active materials are key elements, since they limit the performance of the batteries and they have a major impact on the battery cost.

Numerous cathode active materials have been developed to date for lithium ions cells, including intercalation active materials. An intercalation active material comprises a crystalline host material defining interstitial sites, lithium ions being reversibly intercalated in at least part of the interstitial sites.

The crystalline structure of the host material is chosen to favor large mobility of the lithium ions. For example, the crystalline material has a lamellar, or olivine or spinel structure.

Lithium nickel manganese cobalt oxides, also called NMC active materials, are known intercalation material, corresponding to the chemical formula $LiNi_xMn_yCo_{1-x-y}O_2$. NMC active materials have good theoretical energy densities, and are compatible with existing Li-ion electrolytes. They also have sloped and smooth voltage profiles, and relatively low cost of manufacturing at scale.

However, NMC active materials suffer from an inherent tendency to release oxygen under abuse conditions such as nail penetration, and overcharge. When combined with flammable organic liquids as an electrolyte, cells that employ these active materials are prone to catastrophic failure modes.

In order to mitigate this hazard, US2022/069292 discloses a blend of cathode active materials. The blend of active materials comprises an NMC active material, namely $Li_aNi_{0.33}Mn_{0.33}Co_{0.33}O_2$ wherein a ranges from 1 to 1.1, and a lithium iron manganese phosphate active material. However, the end of charge voltage of a cathode comprising such a blend of cathode active materials is limited by the NMC active material to around 4.2V, and the fast charge appears to be still too slow. Further, the production costs of a battery comprising a LFMP-NMC cathode are high.

Hence, one aim of the invention is to provide a blend of cathode active materials, and a process for assembling an electrochemical cell comprising such a blend of cathode active materials, the blend and the process allowing increased end-of-charge voltage and/or a faster fast charge, as well as lower or optimized production costs.

To this end, an object of the invention is a blend of cathode active materials for a cathode of an electrochemical cell, the blend of cathode active materials consisting of:

   i) from 10% to 90% by weight of a NMX active material in relation to the total weight of the cathode active material, said NMX active material having the formula LiaNibMncXdO2, wherein:

      * X is selected from the group consisting of: aluminum, boron, calcium, cerium, cobalt, chromium, copper, iron, gallium, lanthanum, magnesium, molybdenum, niobium, neodymium, praseodymium, silicon, strontium, tantalum, titanium, vanadium, tungsten, yttrium, zinc, zirconium and combinations thereof,
      * a ranges from 1 to 1.1,
      * b+c+d = 1, and b ranges from 0.5 to 0.75, c ranges from 0.2 to 0.4, and d is equal to zero or less than 0.1; and

   ii) from 10% to 90% by weight of a LFMP active material in relation to the total weight of the cathode active material, said LFMP active material having the formula LieFefMngDh(PO4), wherein:

      * D is a doping element selected from the group consisting of: aluminium, boron, calcium, cobalt, chromium, copper, magnesium, molybdenum, niobium, nickel, silicon, titanium, vanadium, yttrium, zinc, zirconium, and combinations thereof,
      * e ranges from 1 to 1.1,
      * f+g+h = 1, and g ranges from 0.5 to strictly less than 1, f is less than 0.5, and h is greater than or equal to zero.

The specific ranges of nickel and doping element proportions in the NMX active material in combination with the LFMP active material allow increasing the end of charge voltage beyond 4.2V, up to 4.3 V, or even 4.5 V in some cases.

According to another advantageous aspect of the invention, X is devoid of cobalt;

The invention further relates to a cathode for an electrochemical cell, comprising the blend of cathode active materials according to the preceding embodiments.

According to another advantageous aspect of the invention, the weight percentage of the blend of cathode active materials relative to the total weight of the cathode is comprised from 90% to 100%, preferably from 95% to 99%.

The invention further relates to a process for assembling an electrochemical cell, the process comprising:

- providing an anode comprising an anode active material;
- determining a NMX weight percentage $P_{NMX}$ and a LFMP weight percentage $P_{LFMP}$ of the blend of cathode active materials of the cathode according to one of the preceding embodiments, using at least one parameter representative of the active material of the anode;
- providing the cathode according to one of the preceding embodiments having the determined NMX weight percentage $P_{NMX}$ and LFMP weight percentage $P_{LFMP}$; and
- assembling the cathode and the anode.

In this process, the specific compositions of the cathode and the anode to be assembled are chosen by a global system approach. This means that these compositions are not chosen independently, contrary to prior art processes.

More particularly, the NMX weight percentage and the LFMP weight percentage of the blend of cathode active materials are chosen using at least one parameter representative of the active material of the anode. This allows optimizing the production costs of the electrochemical cell.

According to other advantageous aspects of the invention, the process for assembling an electrochemical cell comprises one or more of the following features, taken in isolation or in any technically possible combination:

- each of the at least one parameter representative of the anode is chosen among:

    a- an anode active material weight percentage ($A_{11}$) relative to the total weight of the anode,
    b- a gravimetric reversible capacity ($A_{12}$) of the anode active material,
    c- a gravimetric irreversible capacity ($A_{13}$) of the anode active material, and
    d- an anode loading ($A_4$) in anode active material;

- each of the NMX weight percentage $P_{NMX}$ and the LFMP weight percentage $P_{LFMP}$ is further determined using at least one parameter representative of the cathode;
- each of the at least one parameter representative of the cathode is chosen among: a weight percentage of the blend of cathode active materials relative to the total weight of the anode, a gravimetric reversible capacity of at least one of the NMX compound and the LFMP compound, a gravimetric irreversible capacity of at least one of the NMX compound and the LFMP compound, and a cathode loading in blend of cathode active materials; and
- the NMX weight percentage $P_{NMX}$ and the LFMP weight percentage $P_{LFMP}$ are chosen according to the following equations:

$$\begin{cases} P_{LFMP} = \dfrac{A_{11} \times A_{13} \times \dfrac{A_4}{AC_2 \times C_4} - C_{11} \times C_{13}}{C_{23} - C_{13}} \\[2em] P_{LFMP} = \dfrac{A_{11} \times A_{12} \times \dfrac{A_4}{AC_1 \times C_4} - C_{11} \times C_{12}}{C_{22} - C_{12}} \\[1em] P_{LFMP} + P_{NMX} = 100\% \end{cases}$$

wherein $AC_1$ is the ratio of an anode first charge capacity and of a cathode first charge capacity and $AC_2$ is the ratio of an irreversible capacity of the anode and of an irreversible capacity of the cathode.

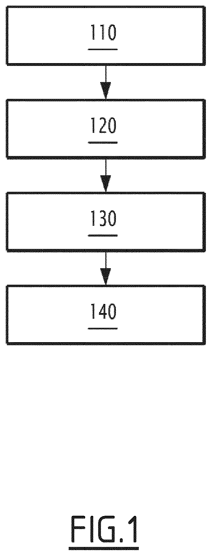

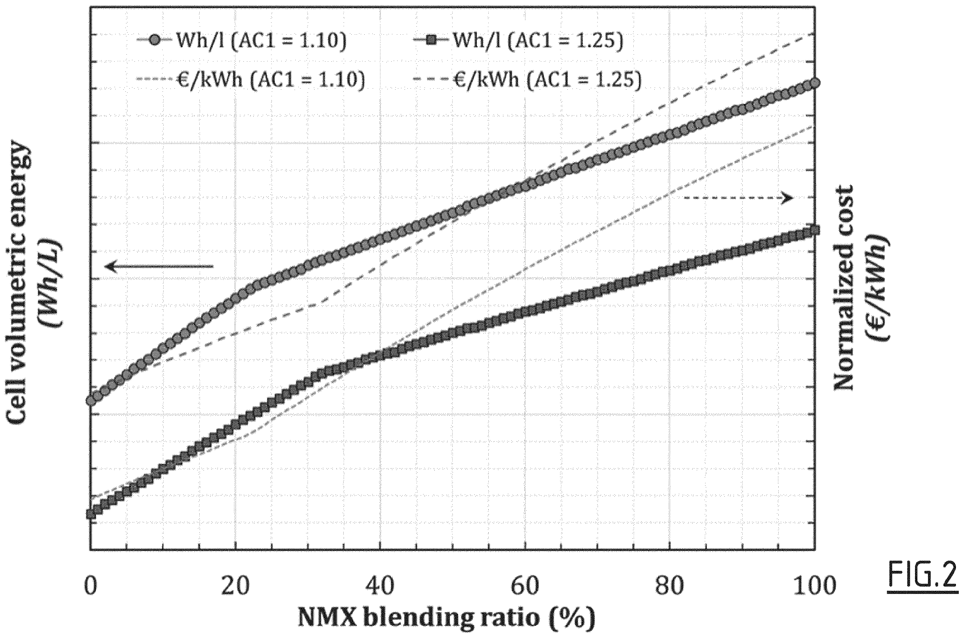

Figure 1 is a flow chart of an embodiment of the process according to the invention. Figure 2 shows the cell volumetric energy and the normalized cell process cost as a function of the ratio $P_{NMX}/P_{LFMP}$ of the NMX weight percentage $P_{NMX}$ and the LFMP weight percentage $P_{LFMP}$ for the set of input parameters of example 1 of table 1 and for the set of input parameters of example 2 of table 1.

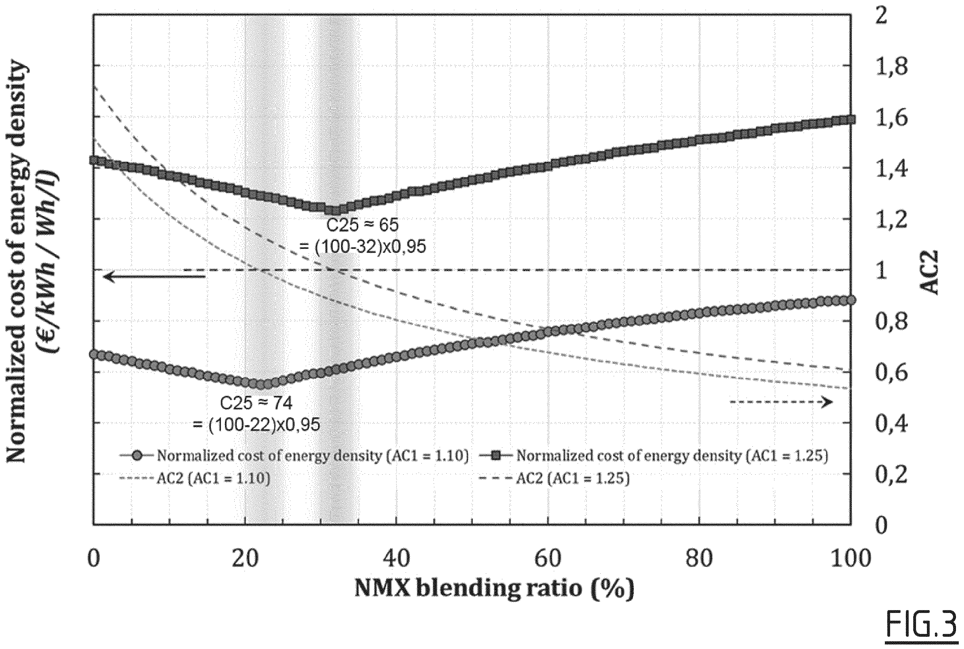

Figure 3 shows the normalized cost of energy density and the $AC_2$ parameter as a function of the ratio $P_{NMX}/P_{LFMP}$ of the NMX weight percentage $P_{NMX}$ and the LFMP weight percentage $P_{LFMP}$ for the set of input parameters of example 1 of table 1 and for the set of input parameters of example 2 of table 1, except that $AC_2$ is variable in this case.

The invention relates to a blend of cathode active materials configured for use in a cathode of an electrochemical cell and to the corresponding cathode.

The electrochemical cell typically comprises the cathode according to the invention and an anode separated by a separator, and an electrolyte solution, adapted for enabling ions exchanges between the cathode and the anode.

The electrolyte solution impregnates the cathode and the anode, as well as the separator.

The electrochemical cell is of the lithium-ion type.

The cathode comprises a blend of cathode active materials according to the invention and one or more additives.

The one or more additives may comprise a binder. The binder can be a polymeric binder such as polyvinylidene fluoride (PVDF) and its copolymers such as polyvinylidene fluoride-co-hexafluoropropylene (PVDF-HFP), polytetrafluoroethylene (PTFE) and its copolymers, polyacrylonitrile (PAN), poly(methyl) or (butyl)methacrylate, polyvinyl chloride (PVC), poly(vinyl formal), polyesters, block polyetheramides, acrylic acid polymers, methacrylic acid, acrylamides, itaconic acid, sulfonic acid, cellulosic compounds, elastomers chosen from styrene-butadiene rubber (SBR), butadiene-acrylonitrile rubber (NBR) and hydrogenated butadiene-acrylonitrile rubber (HNBR), and mixtures thereof.

The blend of cathode active materials consists of from 10% to 90% by weight of a NMX active material and from 10% to 90% by weight of a LFMP active material.

The chemical formula of the NMX active material is $Li_aNi_bMn_cX_dO_2$, wherein X, a, b, c, and d are as defined above.

Preferably, X is chosen among aluminum, boron, magnesium, silicon, cobalt, tungsten and combinations thereof.

In a particular embodiment, a is equal to 1.

Alternatively, a ranges from strictly more than 1.0 to 1.1, preferably from 1.00 to 1.05.

Preferably, b ranges from 0.55 to 0.70.

Preferably, c ranges from 0.25 to 0.35.

In a particular embodiment, d is less than 0.10, more preferably less than 0.08.

In a particular embodiment, X is devoid of cobalt. This provision allows to reduce the ecological footprint of the cathode.

In a particular embodiment, d is equal to zero. In this case, the NMX active material has the formula $Li_aNi_bMn_cO_2$.

The chemical formula of the LFMP active material is $Li_eFe_fMn_gD_h(PO_4)$, wherein D, e f, g and h are as defined above.

In a particular embodiment, e is equal to 1.

Alternatively, e ranges from strictly more than 1 to 1.1, preferably from 1.00 to 1.02. f ranges from strictly more than zero to 0.5.

Preferably, g ranges from 0.55 to 0.95.

In a particular embodiment, h is equal to zero.

Alternatively, h is strictly more than zero.

The weight percentage $C_{11}$ of the blend of cathode active materials relative to the total weight of the cathode is for example comprised from 90% to 100%, preferably from 95% to 99%.

The total first charge capacity of the cathode according to the invention is noticeably greater than the discharge capacity. The capacity that is available to the load after the electrode is formed, i.e. after a formation cycle, a control cycle and a cycle at nominal cell rate, assuming no end of charge capacity slippage, is called reversible capacity while the difference between the reversible capacity and the total capacity is defined as the irreversible capacity of the cathode. Hence, the cathode is characterized by:

- a gravimetric reversible capacity $C_{12}$ (respectively $C_{22}$) of the NMX active material (respectively of the LFMP active material). The gravimetric reversible capacity $C_{12}$ (respectively $C_{22}$) of the NMX active material (respectively of the LFMP active material) is the amount of electric charge the NMX active material (respectively LFMP active material) can deliver per gram of material, after the formation cycles are completed. The gravimetric reversible capacities $C_{12}$ and $C_{22}$ of the NMX active material and of the LFMP active material are typically expressed in $mAh.g^{-1}$; and

- a gravimetric irreversible capacity $C_{13}$ (respectively $C_{23}$) of the NMX active material (respectively of the LFMP active material). The gravimetric irreversible capacity $C_{13}$ (respectively $C_{23}$) of the NMX active material (respectively of the LFMP active material) is the difference between the total gravimetric charge capacity of the LFMP active material (respectively of the LFMP active material) and of the gravimetric reversible capacity $C_{12}$ (respectively $C_{22}$) of the NMX active material (respectively of the LFMP active material). The cathode gravimetric irreversible capacities $C_{13}$ and $C_{23}$ of the NMX active material and of the LFMP active material are typically expressed in $mAh.g^{-1}$.

Gravimetric reversible capacity and gravimetric irreversible capacity of a given active material are measured using coin cells comprising the active material embedded in a working electrode and a counter electrode made of metallic lithium.

According to an embodiment, the process for making coin cells for battery material capacity assessment is as follows:

In a first step, an electrolyte solution is prepared, by mixing solvents, salts and additives in predetermined proportions.

In a second step, an electrode slurry is prepared, by mixing the active material, conductive additives, and binders in predetermined proportions.

The electrode slurry is then coated onto a current collector. The current collector consists of copper in case the active material is an anode active material. In case of a cathode active material, the current collector consists of aluminum.

The current collector is provided as a foil.

The coated foil is then dried in an oven to evaporate the solvents and the remaining moisture.

Next, the coin cell is assembled. To this purpose, the coated foil is cut into circular shapes and assembled into a coin cell.

The coin cell comprises a working electrode, a counter electrode, and a separator. The working electrode comprises the active material of interest. The counter electrode is made out of metallic lithium. The separator is a porous membrane configured to prevent the working electrode and the counter electrode from coming into contact with each other.

The coin cell is then filled with the electrolyte solution.

The measurement of the gravimetric irreversible (respectively irreversible) capacity of a given active material comprises measuring the capacity of the coin cell, which is the amount of charge that the coin cell can exchange with an external device.

The capacity of the coin cell is measured by charging the coin cell to a specific voltage at a specific current and then discharging it at a specific voltage and a specific current. The voltage and current are chosen based on the specifications of the battery being tested.

The gravimetric capacity is obtained by dividing the capacity of the coin cell by the mass of active material comprised within the coin cell.

The gravimetric reversible capacity of an active material is obtained during the discharge of the above-described coin cell under nominal conditions after the formation cycles, divided by the mass of the active material comprises within the tested cell.

The gravimetric irreversible capacity of an active material is obtained by subtracting the first charge capacity up to its fully charged state divided by the mass of the active material comprised within the tested cell and the gravimetric reversible capacity.

The nominal conditions include conditions on the currents, the voltages and the temperatures applied for both the charge and the discharge.

Nominal conditions on the currents range for example from C/50 to C rate equivalent, preferably from C/20 to C/2 rate equivalent, where the C rate is the discharge current that entirely discharges the coin cell in 1 hour.

Nominal conditions on end of charge voltages range for example from 3.7 V to 4.6 V relative to the counter electrode of metallic lithium , preferably from 4.2 V to 4.5 V.

Nominal conditions on end of discharge voltages range for example from 2.0 V to 3.6 V relative to the counter electrode of metallic lithium, preferably from 2.5V to 3.3 V.

Nominal conditions on the temperature range for example from 10°C and 70°C, preferably from 20°C to 60°C.

Nominal conditions on the currents and temperatures may include different current and temperature conditions for the same cycle.

The gravimetric reversible capacity $C_{12}$ of the NMX active material ranges for example from 150 mAh/g to 300 mAh/g, preferably from 170 mAh/g to 280 mAh/g, more preferably from 180 mAh/g to 250 mAh/g.

The gravimetric reversible capacity $C_{22}$ of the LFMP active material ranges for example from 130 mAh/g to 200 mAh/g, preferably from 140 mAh/g to 180 mAh/g.

The gravimetric irreversible capacity $C_{13}$ of the NMX active material ranges for example from 5 mAh/g to 50 mAh/g, preferably from 10 mAh/g to 40 mAh/g.

The gravimetric irreversible capacity $C_{23}$ of the LFMP active material ranges for example from 1 mAh/g to 40 mAh/g, preferably from 3 mAh/g to 35 mAh/g, more preferably from 5 mAh/g to 30 mAh/g.

The cathode is further characterized by a cathode loading $C_4$ in the blend of cathode active materials. The cathode loading $C_4$ is the weight of blend of active materials per unit area of a current collector of the cathode. The cathode loading $C_4$ is typically expressed in $mg/cm^2$.

The cathode loading $C_4$ ranges for example from 5 $mg/cm^2$ to 40 $mg/cm^2$ per side of current collector, preferably from 8 $mg/cm^2$ to 35 $mg/cm^2$, more preferably from 10 $mg/cm^2$ to 30 $mg/cm^2$ per side of current collector.

The anode comprises an anode active material and one or more additives.

The one or more additives may comprise a binder, for example chosen among polyvinylidene fluoride (PVDF) and its copolymers, polytetrafluoroethylene (PTFE) and its copolymers, polyacrylonitrile (PAN), poly(methyl) or (butyl) methacrylate, polyvinyl chloride (PVC), poly(vinyl formal), polyesters, block polyetheramides, acrylic acid polymers, methacrylic acid, acrylamides, itaconic acid, sulfonic acid, elastomers such as styrene butadiene rubber (SBR), sodium carboxymethyl cellulose (Na-CMC), cellulosic compounds, and their mixtures.

The anode active material is configured for receiving reversibly lithium ions during a high number of charge and discharge cycles.

The anode active material is further compatible with the chemical composition of the rest of the electrochemical cell.

For example, the anode active material comprises, or consists of, natural or synthetic graphite.

The anode active material may also comprise silicon.

The anode active material weight percentage $A_{11}$ relative to the total weight of the anode is for example comprised from 90% to 100%, preferably form 95% to 99%.

In the same manner as the anode active material, the anode is characterized by:

- an anode gravimetric reversible capacity $A_{12}$; and
- an anode gravimetric irreversible capacity $A_{13}$.

The anode gravimetric reversible capacity $A_{12}$ is the amount of electric charge the anode active material can deliver per gram of material, after the formation cycles are completed. The anode gravimetric irreversible capacity $A_{13}$ is the difference between the total anode gravimetric charge capacity and of the anode gravimetric reversible capacity A12.

The anode gravimetric reversible capacity $A_{12}$ ranges for example from 300 mAh/g to 800 mAh/g, preferably from 320 mAh/g to 700 mAh/g, more preferably from 330 mAh/g to 600 mAh/g, still more preferably from 340 mAh/g to 500 mAh/g.

The anode gravimetric irreversible capacity $A_{13}$ ranges for example from 10 mAh/g to 200 mAh/g, preferably from 15 mAh/g to 150 mAh/g, more preferably from 20 mAh/g to 100 mAh/g still more preferably from 20 mAh/g to 50 mAh/g.

The anode is further characterized by an anode loading $A_4$ in anode active material. The anode loading $A_4$ is the weight of anode active material per unit area of a current collector of the anode. The anode loading $A_4$ is typically expressed in mg/cm$^2$.

The anode loading $A_4$ ranges for example from 5 mg/cm$^2$ to 30 mg/cm$^2$ per side of current collector, preferably from 8 mg/cm$^2$ to 25 mg/cm$^2$ per side of current collector, more preferably from 10 mg/cm$^2$ to 20 mg/cm$^2$ per side of current collector, still more preferably from 10 mg/cm$^2$ to 18 mg/cm$^2$ per side of current collector.

The process 100 for assembling an electrochemical cell according to the invention is described in reference to figure 1.

In an anode provision step 110, the anode comprising the anode active material is provided.

As described above, the anode is characterized by one or more representative parameters chosen among the anode active material weight percentage $A_{11}$ relative to the total weight of the anode, the gravimetric reversible capacity $A_{12}$ of the anode active material, the gravimetric irreversible capacity $A_{13}$ of the anode active material, and the anode loading $A_4$ in anode active material.

In a determination step 120, a NMX weight percentage $P_{NMX}$ and a LFMP weight percentage $P_{LFMP}$ of the blend of cathode active materials of the cathode is determined, using at least one of the parameters representative of the anode, and more particularly of the active material of the anode.

Advantageously, each of the NMX weight percentage $P_{NMX}$ and the LFMP weight percentage $P_{LFMP}$ is further determined using at least one parameter representative of the cathode.

The at least one parameter representative of the cathode is chosen among the weight percentage $C_{11}$ of the blend of cathode active materials, the gravimetric reversible capacities $C_{12}$, $C_{22}$ of the NMX compound and the LFMP compound, the gravimetric irreversible capacities $C_{13}$, $C_{23}$ of the NMX compound and the LFMP compound, and the cathode loading $C_4$ in cathode active material blend of cathode active materials.

The determined NMX weight percentage $P_{NMX}$ is comprised from 10% to 90%.

The determined LFMP weight percentage $P_{LFMP}$ is comprised from 10% to 90%.

The determination step 120 can be performed by a processor receiving the at least one representative parameter of the anode and providing the NMX weight percentage $P_{NMX}$ and the LFMP weight percentage $P_{LFMP}$ based on one or more mathematical relationships.

For example, the NMX weight percentage $P_{NMX}$ and the LFMP weight percentage $P_{LFMP}$ are chosen according to the following equations:

$$\begin{cases} P_{LFMP} = \dfrac{A_{11} \times A_{13} \times \dfrac{A_4}{AC_2 \times C_4} - C_{11} \times C_{13}}{C_{23} - C_{13}} \quad (1) \\[2em] P_{LFMP} = \dfrac{A_{11} \times A_{12} \times \dfrac{A_4}{AC_1 \times C_4} - C_{11} \times C_{12}}{C_{22} - C_{12}} \quad (2) \\[1em] P_{LFMP} + P_{NMX} = 100\% \quad (3) \end{cases}$$

wherein $AC_1$ and $AC_2$ are as defined above.

$AC_1$ is preferably comprised from 1.00 to 1.50, more preferably from 1.02 to 1.40, more preferably from 1.03 to 1.30, still more preferably from 1.05 to 1.25.

$AC_2$ is preferably comprised from 0.90 to 1.10, more preferably from 0.95 to 1.05.

In this case, $AC_1$, $AC_2$, $A_{11}$, $A_{12}$, $A_{13}$, $A_4$, $C_{11}$, $C_{12}$, $C_{13}$, $C_{22}$, $C_{23}$, $C_4$ are determined beforehand and provided as input parameters at the determination step.

Figure 2 shows the cell volumetric energy (on the left axis, expressed in Wh per Liter of cell) and the normalized cell cost (on the right axis, expressed in Euros per nominal kWh) as a function of the ratio $P_{NMX}/P_{LFMP}$ of the NMX weight percentage $P_{NMX}$ and the LFMP weight percentage $P_{LFMP}$ for the set of input parameters of example 1 of table 1 (circles, respectively densely dotted line) and for the set of input parameters of example 2 of table 1 (squares, respectively loosely dotted line). In the case of figure 2, $C_4$ is adjusted to fit equations 1 and 2.

The normalized cell cost is defined as the cost of the components entering into the composition of the cell divided by the nominal energy of the cell.

Table 1: input parameters for examples 1 and 2

| | $AC_1$ | $AC_2$ | $A_{11}$ | $A_{12}$ | $A_{13}$ | $A_4$ | $C_{11}$ | $C_{12}$ | $C_{13}$ | $C_{22}$ | $C_{23}$ | $C_4$ |
|---|---|---|---|---|---|---|---|---|---|---|---|---|
| Example 1 | 1.10 | 1.00 | 95 | 370 | 30 | 15 | 95 | 240 | 40 | 170 | 10 | 27.20 |
| Example 2 | 1.25 | 1.00 | 95 | 370 | 30 | 15 | 95 | 240 | 40 | 170 | 10 | 23.80 |

Figure 2 shows that the NMX active material is both more energy dense and more expensive than the LFMP active material, leading to both an increase of cost and cell volumetric energy as the proportion of NMX active material increases.

This increase is not constant since a change of the slope of the cell volumetric energy curve and of the normalized cell production cost curve can be clearly observed at a ratio $P_{NMX}/P_{LFMP}$ of around 22% in the case of example 1 and of around 32% in the case of example 2.

Figure 3 shows the normalized cost of energy density (on the left axis, expressed in euros per KWh per Wh/Liter of cell) and the $AC_2$ parameter (on the right axis) as a function of the ratio $P_{NMX}/P_{LFMP}$ of the NMX weight percentage $P_{NMX}$ and the LFMP weight percentage $P_{LFMP}$ for the set of input parameters of example 1 of table 1 (circles, respectively densely dotted line) and for the set of input parameters of example 2 of table 1 (squares, respectively loosely dotted line), except that $AC_2$ is variable in this case.

A local minimum is observed for both curves representing the normalized cost of energy density in figure 3 for $AC_2$ close to 1.

For $AC_1$ equal to 1.10 and with the hypothesis of example 1, the optimal NMX weight percentage $P_{NMX}$ is 0.95 x 22 = 21% and the optimal LFMP weight percentage $P_{LFMP}$ is 0.95 x 78 =74%.

For $AC_1$ equal to 1.25 and with the hypothesis of example 2, the optimal NMX weight percentage $P_{NMX}$ is 0.95 x 32 = 31% and the optimal LFMP weight percentage $P_{LFMP}$ is 0.95 x 68 =65%.

In a cathode provision step 130, a cathode comprising the blend of NMX and LFMP active materials having the determined NMX weight percentage $P_{NMX}$ and the determined LFMP weight percentage is provided.

The cathode is for example prepared according to the following process:

In a mixing step, an ink is prepared by mixing the cathode active materials, the binder(s), optionally an electronic conductive material such as carbon blacks, carbon nanotubes, graphene, carbon fibers, or a combination thereof, and at least one solvent.

The solvent is an organic solvent.

The solvent can be chosen from N-methyl-2-pyrrolidone (NMP), dimethyl formamide (DMF), dimethyl sulfoxide (DMSO), cyclopentyl methyl ether (CPME), o-xylene, m-xylene, p-xylene, heptane, a ketone-based solvent such as acetone or methyl ethyl ketone (MEK), and mixtures thereof.

If needed, the viscosity of the ink is adjusted by varying the quantity of solid materials, i.e. the cathode active materials, the binder and the electronic conductive material, and/or by varying the quantity of solvent.

In a coating step, the ink is deposited on one or both sides of a current collector.

The current collector is a current-conducting support.

The current collector can comprise or consist of graphite or metal, such as nickel, steel, stainless steel or aluminum, preferably aluminum.

The current collector can also be coated on one or both sides with a layer of graphite.

The current collector is for example two-dimensional. The current collector is for example a full strip or a perforated strip.

In a drying step, the ink-coated current collector is placed in an oven and the solvent is evaporated.

The quantity of solid material remaining after evaporation of the solvent can range from 35% to 65%, preferably from 45% to 55% by weight relative to the weight of ink before drying.

In an optional calendaring step, the thickness of the ink coating layer of the current collector can be adjusted by compressing the cathode.

In an assembling step 140, the cathode and the anode are assembled together to form the electrochemical cell.

The anode and the cathode are for example placed in a housing with a separator inbetween.

The housing is further filled up with an electrolyte solution.

Then, the housing is closed.

## Claims

1. A blend of cathode active materials for a cathode of an electrochemical cell, the blend of cathode active materials consisting of:

   i) from 10% to 90% by weight of a NMX active material in relation to the total weight of the cathode active material, said NMX active material having the formula $Li_aNi_bMn_cX_dO_2$, wherein:

   * X is selected from the group consisting of: aluminum, boron, calcium, cerium, cobalt, chromium, copper, iron, gallium, lanthanum, magnesium, molybdenum, niobium, neodymium, praseodymium, silicon, strontium, tantalum, titanium, vanadium, tungsten, yttrium, zinc, zirconium and combinations thereof,
   * a ranges from 1 to 1.1,
   * b+c+d = 1, and b ranges from 0.5 to 0.75, c ranges from 0.2 to 0.4, and d is equal to zero or less than 0.1; and

   ii) from 10% to 90% by weight of a LFMP active material in relation to the total weight of the cathode active material, said LFMP active material having the formula $Li_eFe_fMn_gD_h(PO_4)$, wherein:

   * D is a doping element selected from the group consisting of: aluminium, boron, calcium, cobalt, chromium, copper, magnesium, molybdenum, niobium, nickel, silicon, titanium, vanadium, yttrium, zinc, zirconium, and combinations thereof,
   * e ranges from 1 to 1.1,
   * f+g+h = 1, and g ranges from 0.5 to strictly less than 1, f is less than 0.5, and h is greater than or equal to zero.

2. The blend of cathode active materials according to claim 1, wherein X is devoid of cobalt.

3. A cathode for an electrochemical cell, comprising the blend of cathode active materials according to claim 1 or 2.

4. The cathode according to claim 3, wherein the weight percentage ($C_{11}$) of the blend of cathode active materials relative to the total weight of the cathode is comprised from 90% to 100%, preferably from 95% to 99%.

5. A process for assembling an electrochemical cell, the process comprising:

   - providing an anode comprising an anode active material;
   - determining a NMX weight percentage ($P_{NMX}$) and a LFMP weight percentage ($P_{LFMP}$) of the blend of cathode active materials of the cathode according to claim 3 or 4, using at least one parameter representative of the active material of the anode;
   - providing the cathode according to claim 3 having the determined NMX weight percentage ($P_{NMX}$) and LFMP weight percentage ($P_{LFMP}$); and

- assembling the cathode and the anode.

6. The process according to claim 5, wherein each of the at least one parameter representative of the anode is chosen among:

- an anode active material weight percentage ($A_{11}$) relative to the total weight of the anode,
- a gravimetric reversible capacity ($A_{12}$) of the anode active material,
- a gravimetric irreversible capacity ($A_{13}$) of the anode active material, and
- an anode loading ($A_4$) in anode active material.

7. The process according to claim 6, wherein each of the NMX weight percentage ($P_{NMX}$) and the LFMP weight percentage ($P_{LFMP}$) is further determined using at least one parameter representative of the cathode.

8. The process according to claim 7, wherein each of the at least one parameter representative of the cathode is chosen among:

- a weight percentage ($C_{11}$) of the blend of cathode active materials relative to the total weight of the anode,
- a gravimetric reversible capacity ($C_{12}$, $C_{22}$) of at least one of the NMX compound and the LFMP compound,
- a gravimetric irreversible capacity ($C_{13}$, $C_{23}$) of at least one of the NMX compound and the LFMP compound, and
- a cathode loading ($C_4$) in blend of cathode active materials.

9. The process according to claim 8, in which the NMX weight percentage ($P_{NMX}$) and the LFMP weight percentage ($P_{LFMP}$) are chosen according to the following equations:

$$\begin{cases} P_{LFMP} = \dfrac{A_{11} \times A_{13} \times \dfrac{A_4}{AC_2 \times C_4} - C_{11} \times C_{13}}{C_{23} - C_{13}} \\ P_{LFMP} = \dfrac{A_{11} \times A_{12} \times \dfrac{A_4}{AC_1 \times C_4} - C_{11} \times C_{12}}{C_{22} - C_{12}} \\ P_{LFMP} + P_{NMX} = 100\% \end{cases}$$

wherein $AC_1$ is the ratio of an anode first charge capacity and of a cathode first charge capacity and $AC_2$ is the ratio of an irreversible capacity of the anode and of an irreversible capacity of the cathode.

$$\underline{FIG.1}$$

FIG.2

FIG.3

# EUROPEAN SEARCH REPORT

**Application Number**

EP 24 30 5260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/069292 A1 (HOFFERT WESLEY [US] ET AL) 3 March 2022 (2022-03-03) * claims 1-21 * * paragraph [0044] - paragraph [0045] * | 1-9 | INV. H01M4/525 H01M4/04 H01M10/0525 H01M4/131 |
| X | US 2021/083289 A1 (CHEN XILIN [US] ET AL) 18 March 2021 (2021-03-18) * claims 1-20 * * table 1 * | 1-9 | C01G53/00 H01M4/505 H01M4/36 |
| X | US 2023/402583 A1 (BUCHHOLZ DANIEL [DE] ET AL) 14 December 2023 (2023-12-14) * paragraph [0001] * * paragraph [0030] - paragraph [0031] * * claims 11-20 * | 1-9 | |
| A | US 2021/202940 A1 (LI JIANYANG [US] ET AL) 1 July 2021 (2021-07-01) * claims 1,2 * | 1-9 | |

**TECHNICAL FIELDS SEARCHED (IPC)**

H01M

The present search report has been drawn up for all claims

| Place of search | Date of completion of the search | Examiner |
|---|---|---|
| Munich | 31 July 2024 | Kuhn, Tanja |

## ANNEX TO THE EUROPEAN SEARCH REPORT
## ON EUROPEAN PATENT APPLICATION NO.

EP 24 30 5260

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | | Publication date |
|---|---|---|---|---|
| US 2022069292 A1 | 03-03-2022 | CN | 113273001 A | 17-08-2021 |
| | | DE | 112020000220 T5 | 26-08-2021 |
| | | KR | 20210102469 A | 19-08-2021 |
| | | US | 2022069292 A1 | 03-03-2022 |
| | | WO | 2020146218 A1 | 16-07-2020 |
| US 2021083289 A1 | 18-03-2021 | CN | 114375515 A | 19-04-2022 |
| | | EP | 4029071 A1 | 20-07-2022 |
| | | US | 2021083289 A1 | 18-03-2021 |
| | | WO | 2021048796 A1 | 18-03-2021 |
| US 2023402583 A1 | 14-12-2023 | CN | 116420250 A | 11-07-2023 |
| | | DE | 102020130687 A1 | 25-05-2022 |
| | | EP | 4248504 A1 | 27-09-2023 |
| | | JP | 2023551438 A | 08-12-2023 |
| | | KR | 20230073277 A | 25-05-2023 |
| | | US | 2023402583 A1 | 14-12-2023 |
| | | WO | 2022106221 A1 | 27-05-2022 |
| US 2021202940 A1 | 01-07-2021 | CN | 112514109 A | 16-03-2021 |
| | | EP | 3782214 A1 | 24-02-2021 |
| | | KR | 20200134334 A | 01-12-2020 |
| | | US | 2021202940 A1 | 01-07-2021 |
| | | WO | 2019204659 A1 | 24-10-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022069292 A